(19) Europäisches Patentamt
European Patent Office
Office européen des brevets

(11) Publication number: 0 399 350 A2

# (12) EUROPEAN PATENT APPLICATION

(21) Application number: 90109211.4

(51) Int. Cl.[5]: C08G 59/14, C08F 299/02

(22) Date of filing: 16.05.90

(30) Priority: 22.05.89 US 354949

(43) Date of publication of application:
28.11.90 Bulletin 90/48

(84) Designated Contracting States:
AT BE CH DE DK ES FR GB IT LI NL SE

(71) Applicant: THE DOW CHEMICAL COMPANY
P.O. Box 1967
Midland, Michigan 48641-1967(US)

(72) Inventor: Bertram, James L.
115 Southern Oaks Drive
Lake Jackson, Texas 77566(US)
Inventor: Treybig, Duane S.
226 Banyan Drive
Lake Jackson, Texas 77566(US)
Inventor: Myles, Willie L.
Route 2, Lot 46, Pecan Oak Estates
Brazoria, Texas 77422(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

## (54) Curable compositions.

(57) Adducts of an epoxy resin and a compound containing at least one aromatic hydroxyl group and at least one polymerizable ethylenically unsaturated group per molecule are prepared which are optionally reacted with water, a secondary amine or a phenol which product is copolymerized with a polymerizable monoethylenically unsaturated carboxylic acid and a polymerizable monoethylenically unsaturated compound free of carboxylic acid groups. This product is rendered water miscible by reaction with a primary, secondary or tertiary amine or an alkali metal hydroxide, carbonate or bicarbonate. This product can then be cured with any suitable curing agent such as phenol/aldehyde compounds, urea/aldehyde compounds and melamine/aldehyde compounds and blocked isocyanates.

EP 0 399 350 A2

## CURABLE COMPOSITIONS

The present invention pertains to adducts of compounds containing at least one aromatic hydroxyl group and at least one polymerizable ethylenically unsaturated group per molecule and epoxy resins which are subsequently reacted with ethylenically unsaturated monomers.

Epoxy resins containing polymerizable unsaturated groups have been prepared by reacting epoxy resins with unsaturated acids as described by Brown and Spencer in European Patent Application 0,006,336 and British 1,227,008 published by Nippon Paint Co., Ltd. This product contains ester groups which renders the ultimate product water sensitive.

The compositions of the present invention do not have these ester groups and are thus not so sensitive to hydrolysis.

One aspect of the present invention pertains to an adduct prepared by reacting (1) at least one compound containing only one aromatic hydroxyl group and at least one polymerizable ethylenically unsaturated group per molecule with (2) at least one epoxy resin having an average of more than one vicinal epoxy groups per molecule in quantities which provide a ratio of moles of component (1) to epoxy equivalent contained in component (2) of from 0.05:1 to 1.1:1, preferably from 0.05:1 to 0.5:1, more preferably from 0.1:1 to 0.25:1; and optionally reacting said adduct with (3) at least one of water, phenols or aliphatic or aromatic secondary amines which phenols and amines are free of substituent groups which would tend to prevent or substantially inhibit the free radical polymerization of polymerizable ethylenically unsaturated groups, component (3) being present in an amount which reduces the epoxy content to a value between zero and 1 percent by weight.

Another aspect of the present invention pertains to a polymerizable mixture comprising the reaction product formed above from components (1) and (2), optionally, component (3); (4) a carboxylic acid containing a polymerizable ethylenically unsaturated group; and optionally, (5) a polymerizable ethylenically unsaturated compound free of carboxyl groups; wherein (a) the reaction product formed from components (1) and (2) and, optionally, component (3) is present in amounts of from 25 to 95, preferably from 50 to 90, most preferably from 70 to 85 percent by weight based upon the combined weight of components (1), (2), (3), (4) and (5); (b) component (4) is employed in an amount such that the acid, (-COOH group), content in said polymerizable mixture is from 1 to 30, preferably from 2 to 15, more preferably from 3 to 8 percent by weight, using 45 as the acid equivalent weight; and (c) component (5) is present in an amount of from zero to 74, preferably from 8 to 48, more preferably from 12 to 27 percent by weight based upon the combined weight of components (1), (2), (3), (4) and (5).

Another aspect of the present invention pertains to a polymer resulting from polymerizing the aforementioned polymerizable mixture in the presence of one or more suitable polymerization catalysts.

Another aspect of the present invention pertains to a water miscible product formed by reacting the aforementioned polymer with at least one of (6) a primary amine-containing compound, secondary amine-containing compound, a tertiary amine containing compound, an alkali metal hydroxide, alkali metal carbonate or an alkali metal bicarbonate; wherein component (6) is present in a quantity sufficient to render the resultant product water miscible.

Still another aspect of the present invention pertains to a process for preparing the aforementioned adduct, polymerizable mixture, polymer, and water miscible product.

The term "water miscible" product, means a product that is either dispersible or soluble in water.

A further aspect of the present invention pertains to curable compositions comprising the aforementioned polymers and a curing quantity of at least one suitable curing agent therefor.

A further aspect of the present invention pertains to a product resulting from curing the aforementioned curable composition.

A still further aspect of the present invention pertains to coating compositions comprising the aforementioned polymers and a curing quantity of at least one suitable curing agent therefor.

Yet a further aspect of the present invention pertains to a process for preparing the aforementioned curable composition, product and coating composition.

Suitable compounds containing only one aromatic hydroxyl group and at least one polymerizable ethylenically unsaturated group per molecule which can be employed herein as component (1) include, for example, those represented by the following formula I:

Formula I

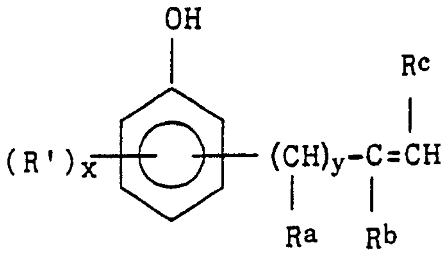

wherein each R′, $R^a$, $R^b$ and $R^c$ are independently hydrogen or a group which does not substantially inhibit free radical polymerization, for example, a halogen, particularly chlorine or bromine, a nitro group, a cyano group or a hydrocarbyl or hydrocarbyloxy group having from 1 to 14 carbon atoms; x has a value from 1 to 4 and y has a value suitably from zero to 18, more suitably from zero to 10, most suitably from zero to 4.

The term "hydrocarbyl" as employed herein means any aliphatic, cycloaliphatic, aromatic, aryl substituted aliphatic or cycloaliphatic, or aliphatic or cycloaliphatic substituted aromatic groups. The aliphatic groups can be saturated or unsaturated. Likewise, the term "hydrocarbyloxy" means a hydrocarbyl group having an oxygen linkage between it and the carbon to which it is attached.

Particularly suitable compounds containing only one aromatic hydroxyl group and at least one polymerizable ethylenically unsaturated group per molecule which can be employed herein as component (1) include, for example, p-isopropenylphenol, o-isopropenylphenol, m-isopropenylphenol, 2,6-dibromoisopropenylphenol, 2,6-dichloroisopropenylphenol, 2-methoxyisopropenylphenol, 2,6-dimethylisopropenylphenol, 2-propenylphenol, 4-propenylphenol, 3-n-pentadecenylphenol, 2-methoxy-4-propenylphenol (isoeugenol), trans-2-ethoxy-5-(1-propenyl)phenol, 2-propenyl-6-ethoxyphenol, 2-methyl-4-propenylphenol, 2-cyano-3-(hydroxyphenyl)-1-propene, α-cyano-4-hydroxystyrene, 2-methoxy-3-(hydroxyphenyl)-1-propene, 2-choro-3-(hydroxyphenyl)-1-propene, 2-methyl-isopropenylphenol, 2-allylphenol, 4-allyl-2-methoxy-phenol (eugenol), 4-allyl-2,6-dimethoxyphenol, 2-allyl-4-methylphenol, 2-allyl-6-methylphenol, 1-methyl-2-(hydroxyphenyl)propene, hydroxy styrene, 2-methoxy-4-vinylphenol and mixtures thereof.

Suitable epoxy resins which can be employed herein as component (2) include, for example, those represented by the following formulas II-V:

Formula II

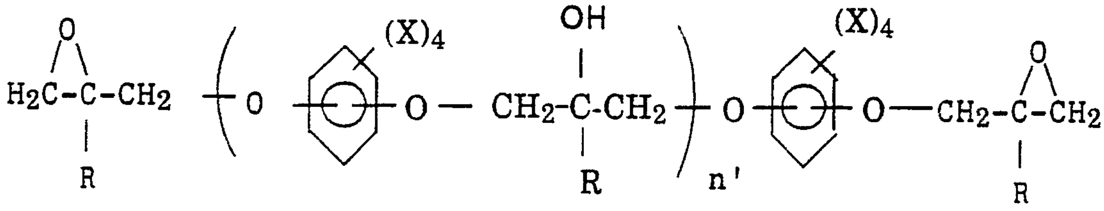

Formula III

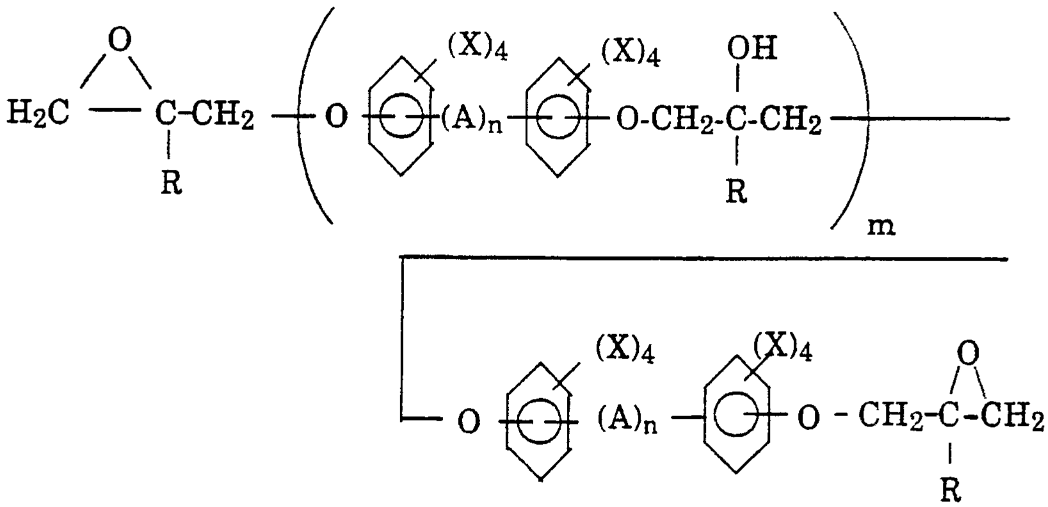

Formula IV

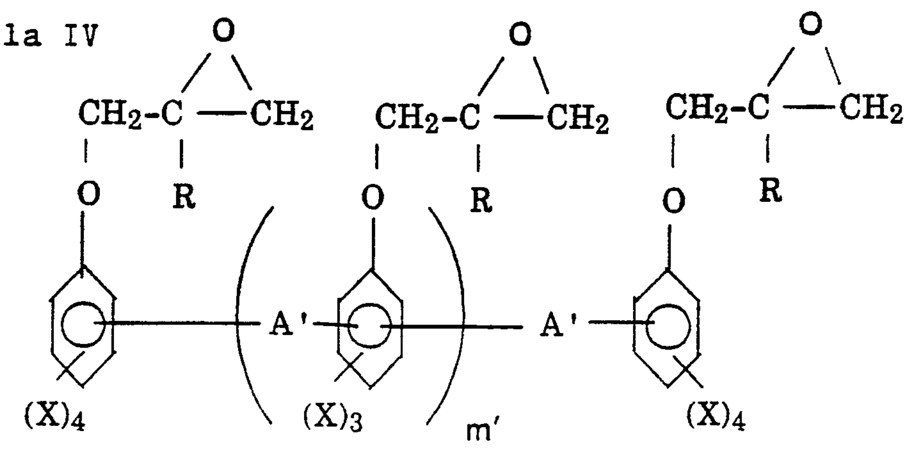

Formula V

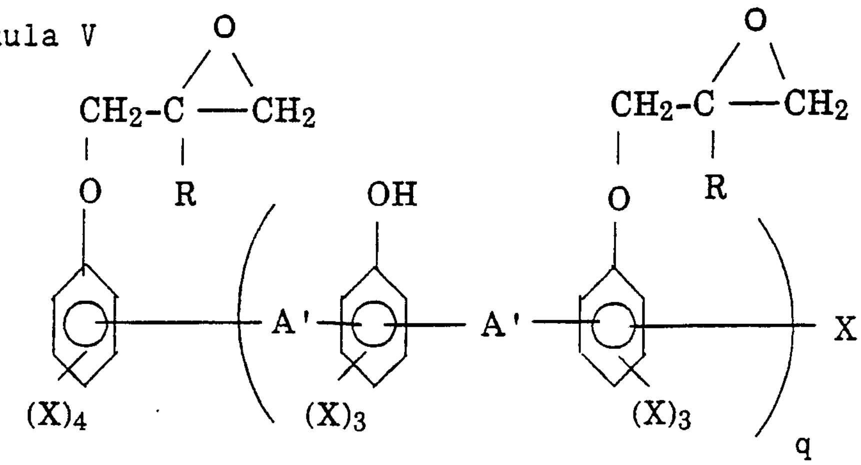

wherein each A is independently a divalent hydrocarbyl group having from 1 to 20, preferably from 1 to 4 carbon atoms, -O-, -S-, -S-S-, -SO-, $-SO_2-$, or -CO-; each A′ is independently a divalent hydrocarbyl group having from 1 to 20, preferably from 1 to 4 carbon atoms; each R is independently hydrogen or an alkyl group having from 1 to 6 carbon atoms; each X is independently hydrogen, bromine, chlorine, or a hydrocarbyl or hydrocarbyloxy group having from 1 to 20, preferably from 1 to 4 carbon atoms; m has an average value from zero to 30, preferably from 2 to 20, most preferably from 3 to 18; m′ has a value from 0.01 to 0.5, preferably from 0.01 to 0.25, more preferably from 0.01 to 0.1; n has a value of zero or 1; n′ has an average value of from zero to 30, preferably from 2 to 20, most preferably from 3 to 18; and q has an average value of from 1 to 6, preferably from 1 to 2.

Suitable epoxy resins which can be employed herein as component (2) also include, for example, those disclosed by Kanagawa et al. in U.S. Patent 4,211,715.

Particularly suitable epoxy resins which can be employed herein as component (2) include, for example, the diglycidyl ethers of bisphenol A, the diglycidyl ethers of brominated or alkylated or alkoxylated or hydroxyalkylated bisphenol A, or the diglycidyl ethers of cardanol-phenol bisphenol.

Suitable secondary amines which can be employed herein as component (3) include, for example, those represented by the formula $H\text{-}N\text{-}R_2$ wherein each R is independently a hydrocarbyl group having from 1 to 9, preferably from 2 to 4 carbon atoms which can be substituted with any group which does not substantially inhibit free radical polymerization such as, for example, a halogen, particularly chlorine or bromine, a nitro group, a hydroxy group or an alkyl group having from 1 to 9 carbon atoms. Particularly suitable secondary amines employed herein include, for example, diethylamine, dipropylamine, dibutylamine,di-n-nonylamine, di-n-dodecylamine, N-methyl-n-octadecylamine, diethanolamine, methylethanolamine, ethylethanolamine, bis(methoxyethyl)amine, bis(methoxypropyl)amine, bis-(butoxyethyl)amine, bis(butoxypropyl)amine, piperidine, 4-ethylpiperidine and mixtures thereof.

Suitable phenols which can be employed herein as component (3) include, for example, those represented by the following formula VI:

Formula VI

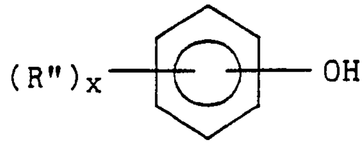

wherein each R″ is independently hydrogen, a halogen, particularly chlorine or bromine, a hydrocarbyl or hydrocarbyloxy group having from 1 to 20, preferably from 1 to 10 carbon atoms which can contain a substituent group which does not significantly prohibit free radical polymerization for example, a halogen, particularly chlorine or bromine, a nitro group or an alkyl group having from 1 to 9 carbon atoms and x has a value from 1 to 4.

Particularly suitable phenols which can be employed herein as component (3) include, for example, phenol, o-cresol, p-cresol, nonylphenol, chlorophenol, dichlorophenol, trichlorophenol, bromophenol,

dibromophenol, tribromophenol, butylphenol, 4-isopropylphenol, 4-heptyloxyphenol, 3-n-pentadecylphenol, m-methoxyphenol, 3,4-methylene-dioxyphenol and mixtures thereof.

Suitable carboxylic acids which can be employed herein as component (4) include, for example, acrylic acid, methacrylic acid, crotonic acid, tiglic acid, 2,4-hexadienoic acid, itaconic acid, citraconic acid, mesaconic acid, maleic acid, fumaric acid, elaidic acid, erucic acid and mixtures thereof.

Suitable polymerizable ethylenically unsaturated material free of acid groups which can be employed herein as component (5) include, for example, unsaturated aromatic compounds, unsaturated aliphatic compounds, alkylacrylates, alkylmethacrylates, hydroxyalkylacrylates, hydroxyalkylmethacrylates, unsaturated nitriles, unsaturated amides and combinations thereof. Particularly suitable polymerizable materials include for example, styrene, α-methylstyrene, vinyl toluene, methyl methacrylate, butadiene, acrylonitrile, methacrylonitrile, vinyl chloride, vinylidene chloride, vinyl acetate, isoprene, isobutylene, chloroprene, methylacrylate, ethylacrylate, butylacrylate, 2-ethylhexylacrylate, methylmethacrylate, ethylmethacrylate, butyl-methacrylate, 2-ethylhexylmethacrylate, acrylamide, methacrylamide and mixtures thereof.

Suitable primary, secondary or tertiary amines which can be employed herein as component (6) include, for example, those represented by the formula

$$\begin{array}{c} R^3-N-R^1 \\ | \\ R^2 \end{array}$$

wherein each $R^1$, $R^2$ and $R^3$ is independently hydrogen or a hydrocarbyl or hydroxyl substituted hydrocarbyl group having from 1 to 9, preferably from 2 to 4 carbon atoms.

Particularly suitable amines which can be employed herein as component (6) include, for example, ammonia, butylamine, dibutylamine, tributylamine, triethylamine, N,N-dimethylethanolamine, methyldiethanolamine, N-methylmorpholine and mixtures thereof. The preferred amine which can be employed herein is N,N-dimethylethanolamine.

Particularly suitable alkali metal hydroxides, carbonates and bicarbonates which can be employed herein as component (6) include, for example, sodium hydroxide, potassium hydroxide, sodium carbonate, potassium carbonate, sodium bicarbonate, potassium bicarbonate and mixtures thereof.

Suitable catalysts which can be employed herein to effect the reaction between components (1) and (2); between component (3) and phenol and between components (1), (2) and a phenol include, for example, quaternary ammonium compounds, phosphonium compounds, phosphines, tertiary amines, metal hydroxides and mixtures thereof.

Particularly suitable quaternary ammonium compounds which can be employed herein as catalysts include, for example, tetrabutylammonium halide, benzyltrimethylammonium chloride and mixtures thereof.

Suitable phosphonium compounds which can be employed herein as catalysts include, for example, those disclosed by Dante et al. in U.S. Patent 3,477,990; by Perry in U.S. Patent 3,948,855 and by Tyler, Jr. et al. in U.S. Patent 4,366,295.

Particularly suitable phosphonium catalysts which can be employed herein include, for example, ethyltriphenyl phosphonium iodide, ethyltriphenyl phosphonium acetate•acetic acid complex, ethyltriphenyl phosphonium phosphate, tetrabutyl phosphonium iodide, tetrabutyl phosphonium acetate•acetic acid complex, tetrabutyl phosphonium phosphate and mixtures thereof.

Particularly suitable phosphines, amines and metal hydroxides which can be employed herein as catalysts include, for example, triphenyl phosphine, N-methylmorpholine, sodium hydroxide, potassium hydroxide and mixtures thereof.

Suitable urea/aldehyde and melamine/aldehyde curing agents which can be employed herein include, for example, hexamethoxymethymelamine, highly methylated melamine-formaldehyde resin, and highly alkylated methoxymethyl, isobutoxymethyl melamine-formaldehyde resin commercially available as Cymel™303, Cymel™325 and Cymel™1161 respectively from the American Cyanamide Co.; Resimene™730 and Resimene™735 melamine-formaldehyde solutions commercially available from Monsanto Co.; Beetle™60 and Beetle™65, urea/formaldehyde resins commercially available from the American Cyanamide Co.; and mixtures thereof.

Suitable phenol/aldehyde curing agents which can be employed herein include, for example, Varcum™ 1131 commercially available from Reichhold Chemical Co.; and mixtures thereof.

Suitable blocked isocyanates which can be employed herein as curing agents include, for example, those described in U.S. Patent 3,959,106 issued to Bosso et al.

If desired, an acid catalyst can be employed herein to enhance the cure of the urea/aldehyde,

melamine/aldehyde or phenol/aldehyde curing agents. Suitable such acid catalysts include, for example, p-toluene sulfonic acid, phosphonic acid, polyphosphoric acid, maleic acid, citric acid and mixtures thereof.

Suitable organic peroxide and azo-catalysts which can be employed herein to conduct the free radical polymerization include, for example, benzoylperoxide, t-butyperbenzoate, ditertiarybutylperoxide, azobisisobutyronitrile, t-butylazo-2-cyano-4-methylpentane, t-butylazo-2-phenylpropane and mixtures thereof.

It has also been found advantageous to include some solvent in the reaction mixture. The presence of such solvents tends to facilitate melting of solid epoxy resins, facilitate contact of the reactants and thereby promote reaction rate and film formation. Suitable such solvents include, for example, glycol ethers and esters or any combination thereof. Particularly suitable glycol ethers which may be employed herein include, for example, ethylene glycol monobutyl ether (2-butoxyethanol), diethylene glycol monopropyl ether, diethylene glycol monobutyl ether, diethylene glycol monohexyl ether, propylene glycol monopropyl ether, propylene glycol monobutyl ether, propylene glycol tertiary butyl ether, propylene glycol isopropyl ether, dipropylene glycol monobutyl ether, ethylene glycol phenyl ether, propylene glycol phenyl ether and any combination thereof. Particularly suitable esters which may be employed herein include, for example, 2,2,4-trimethyl-1,3-pentanediol monoisobutyrate, n-pentyl propionate, and $C_6$ to $C_{13}$ alkyl acetates.

The water compatible compositions of the present invention can be formulated with conventional additives. Suitable such additives include, for example, antifoam agents, flow control agents, coupling solvents, coalescing solvents, reactive diluents, UV stabilizers, rheology modifiers, surface tension modifiers, stress release agents and plasticizers. Other additives which can suitably be used herein include, for example, additives which improve slip properties, scratch and mar resistance, adhesion, acid resistance, flexibility, leveling substrate wetting and which reduce overspray sensitivity, flooding, floating, craters, pinholes, orange peel and fish eyes. A partial list of suitable additives which can be employed herein include, for example, methacrylamide functional amine adduct of neopentyl(diallyl)oxy, tri(dioctyl)pyrophosphato titanate which is commercially available from Kenrich Petrochemicals, Inc. as LICA 38J; methacrylamide functional amine adduct of neopentyl(diallyl)oxy, tri(dioctyl)pyro-phosphato zirconate which is commercially available from Kenrich Petrochemicals, Inc. as LZ 38J; a solution of polyether modified methyl alkyl polysiloxanes which is commercially available from BYK-Chemie as BYK-321; a solution of polyether modified di-methyl polysiloxanes which is commercially available from BYK-Chemie as BYK 306; and a silicone resin solution which is commercially available as SR882M from General Electric.

The coating compositions of the present invention can be pigmented and/or opacified with known pigments and opacifiers. For many uses, including food uses, the preferred pigment is titanium dioxide. Generally, the pigment is used in a pigment to binder ratio of from 0.1:1 to 1:1 by weight. Other pigments include, antimony oxide, zinc oxide, white lead, calcium carbonate, silica, aluminum silicate, magnesium silicate, aluminum potassium silicate and any combination thereof.

The aqueous coating composition of the present invention can be applied by any conventional method known in the coating industry. Therefore, spraying, rolling, dipping, flow control or electrodeposition applications can be employed for both clear and pigmented films. Spraying is the preferred coating technique. After the coating composition is applied onto a substrate, the coating composition is thermally cured at temperatures of from 95 °C to 235 °C or higher, for periods in the range of from 1 to 30 minutes to form a cured coating. The resultant films can be dried at ambient temperatures for longer periods of time.

In carrying out one embodiment of the process of the present invention an adduct is prepared by reacting component (1), at least one compound containing only one aromatic hydroxyl group and at least one polymerizable ethylenically unsaturated group per molecule, for example, isopropenylphenol, with component (2), at least one epoxy resin having an average of more than one vicinal epoxy groups per molecule, for example, a bisphenol A based epoxy, in quantities which provide a ratio of moles of component (1) to epoxy equivalent contained in component (2) of from 0.05:1 to 1.1:1. The amount of epoxy, component (1), preferably used is from 5 to 50 percent by weight based on the total weight of the final product, more preferably from 10 to 30 weight percent and most preferably from 10 to 20 weight percent. The epoxy is preferably blended with a first solvent such as 2-butoxyethanol. Preferably the amount of first solvent used is at least 0.5 weight percent more preferably at least 2.5 weight percent and most preferably at least 5 weight percent. The blending is carried out in a period of from 5 minutes to 8 hours, preferably in 10 minutes to 2 hours and more preferably from 15 minutes to 1 hour at a temperature of from 25 °C to 200 °C, preferably from 50 °C to 160 °C and more preferably from 80 °C to 140 °C.

The unsaturated compound, component (1), is then added to the blended mixture. A catalyst, for example, tetrabutyl phosphonium acetate•acetic acid complex, may also be added to the reaction mixture in an amount of from 0.001 to 10 percent by weight based on the weight of the epoxy, preferably from 0.05 weight percent to 1.0 weight percent and more preferably from 0.1 to 0.5 weight percent. The above

reaction for preparing the adduct is carried out at a reaction temperature of from 50° C to 240° C, preferably from 80° C to 220° C and more preferably from 120° C to 180° C at a reaction time of from 15 minutes to 24 hours, preferably from 30 minutes to 8 hours and more preferably from 1 hour to 6 hours.

Optionally, the adduct prepared above may be reacted with component (3). Component (3) can be at least one of water, phenols or aliphatic or aromatic secondary amines which phenols and amines are free of substituent groups which would tend to prevent or substantially inhibit the free radical polymerization of polymerizable ethylenlcally unsaturated groups. Component (3), for example, diethanolamine, is preferably present in an amount which reduces the epoxy content to a value between zero and about 1 percent by weight. The component (3) may be added to the adduct in a period of 0 to 8 hours, preferably 5 minutes to 4 hours and more preferably 15 minutes to 2 hours at a reaction temperature of from 25° C to 200° C, preferably from 60° C to 150° C and more preferably from 80° C to 125° C.

A polymerizable mixture may be prepared by mixing the adduct prepared above with a monomer component (4), a carboxylic acid containing a polymerizable unsaturated group, for example, methacrylic acid, and optionally, a monomer component (5) a polymerizable ethylenically unsaturated compound free of carboxyl groups sundra styrene. In a preferred embodiment, a monomer liquid mixture of components (4) and (5) are added to the adduct. A monomer polymerization catalyst, for example, azobisisobutyrnitrile, can then be added in an amount of from 0.5 to 15 percent by weight based on total monomer weight, preferably from 0.1 to 8 weight percent and more preferably from 0.5 to 2 weight percent. The monomer polymerization is carried out at a temperature of from 30° C to 200° C, preferably from 80° C to 130° C and more preferably 100° C to 120° C at a monomer addition time of from 15 minutes to 22 hours, preferably 1 hour to 6 hours and more preferably from 1.5 hours to 6 hours to produce a polymer product.

The polymer product prepared above can then be reacted with component (6). Component (6) is at least one of (a) a primary amine-containing compound, (b) a secondary amine-containing compound, (c) a tertiary amine-containing compound, (d) an alkali metal hydroxide, (e) an alkali metal carbonate, (f) an alkali metal bicarbonate, or (g) any combination thereof in an amount which renders the resultant product water miscible. The amount of component (6) for example, N,N-dimethylethanolamine, is based on the unsaturated acid component (4) in the monomer and preferably ranges from 0.25 to 1, more preferably 0.5 to 1, and most preferably from 0.7 to 0.9 equivalent of component (6) per equivalent of acid in the monomer component. The reaction between the polymer product and component (6) is carried out at a temperature of from 25° C to 150° C, preferably from 50° C to 100° C and more preferably from 60° C to 80° C at an addition time of from 0 to 8 hours, preferably from 5 minutes to 2 hours and more preferably from 10 minutes to 1 hour.

While the final formulation can be used in up to 100 percent organic solvent without any water, it is preferred to minimize the organic solvent and use sufficient water to make the formulation useable, for example, by spraying. Generally, the amount of water used is at least 30 weight percent, preferably 40 weight percent and more preferably from 50 to 70 weight percent based on total formulation. The amount of water employed herein in the range of from 70 to 95 weight percent is also operable, however, this range is less preferred.

Water may be added to the reactor mixture in a period of from 0 to 8 hours, preferably from 5 minutes to 4 hours and more preferably from 15 minutes to 2 hours to form an aqueous solution.

In one embodiment of preparing a coating composition of the present invention, the aqueous solution prepared above is mixed with a surface curing agent for example, hexamethoxymethylmelamine. The amount of curing agent used is preferably from 0.5 to 40, preferably from 1 to 30 and more preferably 2 to 20 parts of curing agent per 100 parts of solid resin (e.g., epoxy amines, unsaturated phenol, and monomers). When a catalyst promoter, such as p-toluene sulfonic acid, is used in the reaction mixture it is preferred to use from 0.1 to 5 parts per hundred parts of solid resin (phr), more preferably from 0.2 to 3 phr and most preferably from 0.5 to 2 phr.

The following examples are illustrative of the present invention.

Example 1

A 500-ml three-necked glass flask (reactor) equipped with a thermometer, stirrer, condenser, nitrogen purge, and an addition funnel was charged with 50 grams (0.0278 mole) of a bisphenol A based epoxy with an epoxide equivalent weight of 1800 (commercially available from The Dow Chemical Company as D.E.R.TM 667), and 16.74 grams (0.1416 mole) of 2-butoxyethanol. After blending the mixture of epoxy and 2-butoxyethanol for 30 minutes at 120° C, 1.15 grams (0.0097 mole) of isopropenylphenol and 0.2 grams of a 70 percent by weight solution in methanol of tetrabutylphosphonium acetate•acetic acid complex were

added to the mixture and the temperature raised to 150° C. After 6 hours, the contents of the flask were cooled to 120° C, and 2.02 grams (0.019 mole) of diethanolamine was slowly added through the addition funnel. After digesting the resultant mixture for 30 minutes at 120° C, the temperature was lowered to 100° C, and a monomer solution consisting of 9.62 grams (0.0924 mole) of styrene, 8.38 grams (0.0973 mole) of methacrylic acid, and 0.18 gram (0.0011 mole) of azobisisobutyronitrile, as a catalyst was slowly added over approximately one hour. After the monomer addition, 5.6 grams of n-butanol containing 0.045 grams (0.00027 mole) of azobisisobutyronitrile was added over a 30 minute period, and the reaction was allowed to digest for an additional 30 minutes. The temperature was lowered to 75° C, and 7.4 grams (0.083 mole) of N,N-dimethylethanolamine was added during approximately 15 minutes, followed by the addition of 188 grams of deionized water. The mixture was stirred for an additional 30 minutes as it was allowed to cool to ambient. The final product was a creamy aqueous dispersion with a non-volatile content of 25 weight percent. The viscosity of the dispersion, as measured by a Brookfield viscometer at 25° C, was 10 to 70 cps (0.01 to 0.07 pa•s) at a pH of 7.81. The volatile organic content of the dispersion was 1.9 pounds/gallon (228 grams/liter).

Example 2

A coating was prepared by blending 78.63 pbw (parts by weight) of the aqueous solution of the epoxy resin prepared in Example 1 diluted to 10 percent by weight non-volatiles, 0.9 pbw of hexamethoxymethylmelamine (commercially available from American Cyanamid Co. as Cymel™ 303) and 0.44 pbw of p-toluene sulfonic acid as a catalyst promoter.

This coating was applied to unpolished cold rolled steel panels via a No. 6 Meyer wound wire rod to provide a coating thickness of 0.4 mil (0.1016 mm). The coated panels were baked in an oven at 310° F (154.4° C) for 10 minutes.

Example 3

A bisphenol A epoxy resin with an equivalent weight of 1755 (50.09 grams, 0.0290 equivalent) and 17.04 grams (0.1442 mole) 2-butoxyethanol were added to a reactor of the type described in Example 1. At 123° C, a mixture of 1.37 grams (0.0102 mole) 2-propenylphenol and 0.2 gram of a 70 percent by weight solution in methanol of tetrabutylphosphonium acetate•acetic complex was added to the reactor contents. Then 0.99 gram of 2-butoxyethanol was used to rinse the previous reactants from the addition funnel into the reactor. The temperature was raised to 150° C. After 2 hours between 147° C and 156° C, the beige colored liquid was cooled to 119° C. Diethanolamine (2.16 grams, 0.0205 mole) was added dropwise through the addition funnel. Then 1.004 grams of 2-butoxyethanol was added to the reactor contents. After digesting between 120° C and 134° C for thirty minutes, the temperature was lowered to 100° C. Then a monomer solution of 9.64 grams (0.0925 mole) of styrene, 8.41 grams (0.0977 mole) methacrylic acid and 0.180 gram (0.0011 mole) azobisisobutyronitrile was slowly added over a period of 59 minutes. After the monomer addition, 5.62 grams n-butanol containing 0.045 gram (0.00028 mole) azobisisobutyronitrile was added over a period of 27 minutes. The reactor contents were allowed to digest an additional 30 minutes. The temperature was lowered to about 92° C where an aqueous solution of N,N-dimethyl-ethanolamine was added in four minutes. The aqueous solution of N,N-dimethylethanolamine was prepared by mixing 8.24 grams of N,N-dimethylethanolamine in 43.2 grams of deionized water. Additional deionized water (302 grams) was added over a period of thirty minutes between 47° C and 85° C to give a chalky white aqueous dispersion with a non-volatile content of 18 percent and pH of 8.9. The viscosity measured with a Ford Cup No. 4 was about 890 seconds. The volatile organic content of the dispersion was 2.0 pounds/gallon (240 grams/liter).

Example 4

A coating was prepared by blending 63.6 grams of the aqueous solution prepared in Example 3 after dilution to 10 percent by weight non-volatiles, with 0.98 gram of CYMEL™ 325 to give a formulation containing 15 part per hundred resin (phr) of Cymel™ 325. CYMEL™ 325 is a melamine-formaldehyde resin commercially available from the American Cyanamide Co.

The coating was applied to 24 gauge (4 inches by 12 inches, 101.6 mm x 304.8 mm) unpolished clean-treated cold rolled steel panels with a No. 52 wire wound rod according to ASTM D 4147-82. The resulting coating thickness was 0.26 mil (0.0066 m).

The coating was also applied to tin free steel can stock (5 inches x 11 inches, 127 mm x 279.4 mm) with a No. 52 wire wound rod according to ASTM D 4147-82 for the water pasteurization resistance tests. Before applying the coating, the tin free steel can stock was degreased by washing the panel with aromatic 100 followed by acetone. The washed panels were then blown with nitrogen and placed in an oven at 400°F (204.4°C) for about 5 minutes. The resultant coating thickness was 0.17 mil (0.0043 m). The coated panels were baked in an oven at 400°F (204.4C) for ten minutes.

## Example 5

A bisphenol A epoxy resin with an equivalent weight of 1755 (51.1 grams, 0.0291 equivalent) and 17. 13 grams (0.145 mole) 2-butoxyethanol were weighed into a reactor of the type described in Example 1. At 123°C, a mixture of 1.70 grams (0.0103 mole) 2-methoxy-4-pro-penyl-phenol and 0.21 gram of a 70 percent by weight solution in methanol of tetrabutylphosphonium acetate acetic acid complex was added to the reactor contents. Then 1.02 grams of 2-butoxyethanol was added to the reactor contents and the temperature raised to 150°C. After 119 minutes at a temperature between 148°C and 152°C, the reactor contents were cooled to 120°C. Diethanolamine (2.10 grams, 0.020 mole) was added dropwise through the addition funnel. Then 1.03 grams of 2-butoxyethanol was added to the reactor contents. After digesting between 120°C and 123°C for thirty minutes, the temperature was lowered to 100°C. Then a monomer solution consisting of 9.63 grams (0.0924 mole) styrene, 8.41 grams methacrylic acid and 0.184 gram (0.0977 mole) azobisisobutyronitrile (0.00112 mole) was slowly added over a period of 64 minutes. After the monomer addition, 5.62 grams n-butanol containing 0.0463 gram (0.00028 mole) azobisisobutyronitrile was added over a period of twenty-five minutes. The reactor contents were allowed to digest an additional 30 minutes. Then an aqueous solution of N,N-dimethylethanolamine was added dropwise in a period of 75 minutes at 75°C. The aqueous solution of N,N-dimethylethanolamine was prepared by mixing 8.26 grams of N,N-dimethyl-ethanolamine with 300 grams of deionized water. The chalky white aqueous dispersion with a non-volatile content of 23 percent was stirred an additional 33 minutes as it was allowed to cool. The pH of the aqueous dispersion was 8.7. The volatile organic content of the dispersion was 2.0 pounds gallon (240 grams liter).

## Example 6

A coating was prepared by blending 57.9 grams of the aqueous solution prepared in Example 5 after dilution to 10 percent by weight non-volatiles with 0.62 gram of CYMELTTM 325 to give a formulation containing 11 phr of CYMELTM 325.

The coating was applied to 24 gauge unpolished clean-treated cold rolled steel panels with a No. 52 wire wound rod. The thickness of the coating was 0.28 mil (0.0071 mm).

The coating was also applied to degreased tin free steel can stock with a No. 52 wire wound rod. The thickness of the coating was 0.26 mil (0.0066 mm). The coated panels were baked in an oven at 400°F (204.4°C) for ten minutes.

## Example 7

A bisphenol A epoxy resin with an equivalent weight of 187.5 (50.3 grams, 0.2683 equivalent) and 17.1 grams (0.145 mole) 2-butoxyethanol were weighed into a reactor of the type described in Example 1. The bisphenol A based epoxy resin used is commercially available from The Dow Chemical Company as D.E.R.TM 331. At 119°C, a mixture of 7.14 grams (0.0400 mole) trans-2-ethoxy-5-(1-propenyl)-phenol and 0.215 gram of a 70 percent by weight solution in methanol of tetrabutylphosphonium acetate•acetic complex was added to the reactor contents and the temperature was raised to 150°C. After 107 minutes between 148°C and 158°C, the transparent yellowish brown colored liquid was cooled to 122°C. Diethanolamine (24.69 grams, 0.235 mole) was added dropwise through the addition funnel. After digesting between 114°C and 133°C for thirty-three minutes, the temperature was lowered to 100°C. Then a monomer solution consisting of 17.30 grams (0.166 mole) of styrene, 15.19 grams (0.176 mole) methacrylic acid and 0.186 gram of azobisisobutyronitrile (0.0011 mole) was slowly added over a period of 75 minutes.

After the monomer addition, 5.60 grams n-butanol containing 0.0506 gram (0.00031 mole) azobisisobutyronitrile was added over a period of 27 minutes. The reactor contents were allowed to digest an additional 38 minutes. The temperature was lowered to about 75° C and an aqueous solution of N,N-dimethylethanolamine was prepared by mixing 14.90 grams of N,N-dimethylethanolamine in 310 grams of deionized water. The milky-white colored opaque dispersion with a non-volatile content of 28 percent was stirred an additional 36 minutes as it was allowed to cool to ambient temperature. The viscosity measured with a Ford Cup No. 4 was 785 seconds. The pH of the aqueous dispersion was 9.0. The volatile organic content of the dispersion was 1.3 pounds/gallon (156 grams/liter).

Example 8

A coating was prepared by blending 56.0 grams of the aqueous solution prepared in Example 7 after dilution to 20 percent by weight non-volatiles, with 1.14 grams of CYMEL™ 325 to give a formulation containing 10 phr CYMEL™ 325.

The coating was applied to 24 gauge unpolished clean-treated cold rolled steel panels with a No. 52 wire wound rod. The resultant coating had a thickness of 0.32 mil (0.0081 mm).

The coating was also applied to degreased tin free steel can stock with a No. 34 wire wound rod. The resultant coating thickness was 0.21 mil (0.0053 mm). The coated panels were baked in an oven at 400° F (204.4° C) for ten minutes.

Example 9

A bisphenol A epoxy resin with an epoxide equivalent weight of 1755 (50.1 grams, 0.0285 equivalent) and 14.7 grams (0.124 mole) of 2-butoxyethanol were weighed into a reactor of the type described in Example 1. At 127° C, a mixture of 1.65 grams (0.0101 mole) of 2-methoxy-4-propenylphenol, and 0.214 gram of a 70 percent by weight solution of tetrabutylphosphonium acetate•acetic acid complex in methanol was added dropwise to the reactor contents. Then a 2-butoxyethanol (5.7 grams, 0.048 mole) solution of 4-tertiary butylphenol (1.28 grams, 0.0086 mole) was added dropwise to the reactor contents. The temperature was then raised to 150° C and maintained there for 2 hours. Then the reactor contents were cooled to 122° C and diethanolamine (1.14 grams, 0.0109 mole) was added dropwise. 2-Butoxyethanol (0.7 gram, 0.0059 mole) was used to rinse all the diethanolamine into the reactor. After digesting between 117° C and 122° C for 31 minutes, the temperature was lowered to 97° C. Then a monomer solution consisting of 9.62 grams (0.0924 mole) styrene, 8.42 grams (0.0978 mole) methacrylic acid and 0.184 gram (0.0011 mole) of azobisisobutyronitrile was slowly added over a period of 48 minutes. After the monomer addition, 5.11 grams of n-butanol containing 0.0464 gram (0.00028 mole) azobisisobutyronitrile was added over a period of 31 minutes. The temperature was lowered to 70° C, and an aqueous solution of N,N-dimethylethanolamine was added in a period of 6 minutes. The aqueous solution of N,N-dimethylethanolamine was prepared by mixing 8.24 grams of N,N-dimethylethanolamine in 115 grams deionized water. An additional 280 grams of deionized water was added over a period of 41 minutes. The chalky-white colored opaque dispersion with a non-volatile content of 16 percent was stirred an additional 57 minutes as it was allowed to cool. The aqueous dispersion was diluted further to 8 percent by weight non-volatiles. The pH of the stable aqueous dispersion was 8.6. The viscosity which was measured with a Ford Cup No. 4 was 23 seconds. The volatile organic content of the dispersion was 2.1 pounds/gallon (252 grams/liter).

Example 10

A coating was prepared by blending 49.4 grams of the aqueous solution prepared in Example 9, with 0.44 gram of CYMEL™ 325 to give a formulation containing 11 phr of CYMEL™ 325.

The coating was applied to 24 gauge unpolished clean-treated cold rolled steel panels with a No. 52 wire wound rod. The resultant coating thickness was 0.16 mil (0.0041 mm) to 0.18 mil (0.0046 mm).

The coating was also applied to degreased tin free steel can stock with a No. 52 wire wound rod for the water pasteurization resistance test. The resultant coating thickness was 0.17 mil (0.0043 mm). The coated panels were baked in an oven at 400° F (204.4° C) for 10 minutes.

Example 11

A bisphenol A epoxy resin with an epoxide equivalent weight of 1755 (50.1 grams, 0.0285 equivalent) and 16.68 grams (0.141 mole) of 2-butoxyethanol were weighed into a reactor of the type described in Example 1. At 120 °C, a mixture of 2.37 grams (0.0144 mole) of 2-methoxy-4-propenylphenol, 3.36 grams (0.0152 mole) nonylphenol and 0.215 gram of a 70 percent by weight solution in methanol of tetrabutylphosphonium acetate•acetic acid was added to the reactor contents. 2-Butoxyethanol (1.52 grams, 0.0128 mole) was used to rinse the previous reactants from the addition funnel into the reactor. The temperature was then raised to 150 °C. After 2 hours between 144 °C and 156 °C, the reactor contents were cooled to 103 °C. Then a monomer solution consisting of 9.62 grams (0.0924 mole) styrene, 8.39 grams methacrylic acid (0.0975 mole) and 0.185 gram (0.0011 mole) of azobisisobutyronitrile was slowly added over a period of 41 minutes. After the monomer addition, 5.61 grams of n-butanol containing 0.047 gram (0.0003 mole) azobisisobutyronitrile was added over a period of 34 minutes. The temperature was lowered to 77 °C, and an aqueous solution of N,N-dimethylethanolamine was added in a period of 13 minutes. The aqueous solution of N,N-dimethylethanolamine was prepared by mixing 8.25 grams (0.0926 mole) of N,N-dimethylethanolamine in 100 grams deionized water. An additional 25.5 grams of deionized water was added over a period of 7 minutes. The chalky-white colored opaque dispersion with a non-volatile content of 35.6 percent was stirred an additional 37 minutes as it was allowed to cool. The aqueous dispersion was diluted with water to 20 percent by weight non-volatiles. The pH of the stable aqueous dispersion was 8.1. The viscosity which was measured with a Ford Cup No. 4 was 32 seconds. The volatile organic content of the dispersion was 1.9 pounds/gallon (228 grams/liter).

Example 12

A coating was prepared by blending 51.3 grams of the aqueous solution prepared in Example 11 with 1.06 grams of CYMEL™ 325 to give a formulation containing 10 phr of CYMEL™ 325. The coating was applied to 24 gauge unpolished clean-treated cold rolled steel panels with a No. 28 wire wound rod. The resulting coating thickness was 0.26 mil (0.0066 mm) to 0.29 mil (0.0074 mm). The coating was also applied to degreased tin free steel can stock with a No. 28 wire wound rod for the water pasteurization resistance test. The resultant coating thickness was 0.26 mil (0.0066 mm). The coated panels were baked in an oven at 400 °F (204.4 °C) for 10 minutes.

Example 13

A bisphenol A epoxy resin with an epoxide equivalent weight of 1755 (50.0 grams, 0.0285 equivalent) and 16.68 grams (0.141 mole) of 2-butoxyethanol were added to a reactor of the type described in Example 1. The resin was slowly dissolved by heating between 117 °C and 125 °C for 34 minutes. A mixture of 4.82 grams (0.029 mole) of 2-methoxy-4-propenylphenol and 0.209 gram of a 70 percent by weight solution of tetrabutylphosphonium acetate•acetic acid complex in methanol (A2 catalyst) was added dropwise to the reactor contents. Then 0.99 gram (0.0084 mole) of 2-butoxyethanol was added to rinse all of the 2-methoxy-4-propenylphenol and A2 catalyst into the reactor. The temperature was raised to 150 °C and maintained there for 131 minutes. Then the reactor contents were cooled to 100 °C and a monomer solution consisting of 9.62 grams (0.0924 mole) styrene, 8.39 grams methacrylic acid (0.0975 mole) and 0.182 gram (0.0011 mole) azobisisobutyronitrile was slowly added over a period of 49 minutes. After the monomer addition, 5.60 grams n-butanol containing 0.0458 gram (0.00028 mole) azobisisobutyronitrile was added over a period of 24 minutes. After digesting for 36 minutes at 99 °C, the temperature was lowered to 77 °C. Then an aqueous solution of N,N-dimethylethanolamine was added over a period of 25 minutes. The aqueous solution of N,N-dimethyl-ethanolamine was prepared by mixing 8.24 grams (0.0925 mole) N,N-dimethylethanolamine in 167.0 grams deionized water. An additional 54.5 grams deionized water was added over a period of 12 minutes to give a chalky-white aqueous opaque dispersion with a non-volatile content of 25 percent by weight. The reactor contents were allowed to cool. The resultant aqueous dispersion was diluted further with deionized water to 25 percent by weight non-volatiles. The pH of the aqueous dispersion was 8.3. The viscosity which was measured with a Ford Cup No. 4 was 71 seconds. The volatile organic content of the dispersion was 1.9 pounds/gallon (228 grams/liter).

Example 14

A bisphenol A epoxy resin with an epoxide equivalent weight of 1755 (50.0 grams, 0.0285 equivalent) and 16.68 grams (0.141 mole) of 2-butoxyethanol were added to a reactor of the type described in Example 1. The resin was slowly dissolved by heating at 120 °C for 23 minutes. A mixture of 1.657 grams (0.0101 mole) of 2-methoxy-4-propenylphenol and 0.218 gram of a 70 percent by weight solution of tetrabutylphosphonium acetate•acetic acid complex in methanol (A2 catalyst) was added dropwise to the reactor contents. Then 1.07 grams (0.0090 mole) of 2-butoxyethanol was added to rinse all of the 2-methoxy-4-propenylphenol and A2 catalyst into the reactor. The temperature was raised to 150 °C and maintained there for 122 minutes. Then the reactor contents were cooled to 100 °C and a monomer solution consisting of 9.63 grams (0.0924 mole) styrene, 8.389 grams (0.0974 mole) methacrylic acid and 0.1836 gram (0.0011 mole) azobisisobutyronitrile was slowly added over a period of 57 minutes. After the monomer addition, 5.60 grams n-butanol containing 0.046 gram (0.00028 mole) azobisisobutyronitrile was added over a period of 28 minutes. After digesting for 38 minutes at 102 °C, the temperature was lowered to 75 °C. Then an aqueous solution of N,N-dimethylethanolamine was added over a period of 20 minutes. The aqueous solution of N,N-dimethylethanolamine was prepared by mixing 8.26 grams (0.0926 mole) N,N-dimethylethanolamine in 159.7 grams deionized water. An additional 174.3 grams deionized water was added over a period of 30 minutes to give a chalky-white aqueous opaque dispersion with a non-volatile content of 18 percent by weight. The reactor contents were allowed to cool. The resultant aqueous dispersion was diluted further with deionized water to 8 percent by weight non-volatiles. The viscosity which was measured with a Ford Cup No. 4 was 20 seconds. The volatile organic content of the dispersion was 2.0 pounds/gallon (240 grams/liter).

The following tests were performed on the resultant coated panels.

MEK Resistance

A two pound ball peen hammer with the ball end covered with eight layers of cheese cloth is saturated with methyl ethyl ketone (MEK) and rubbed across the baked panels. One back and forth cycle across the panel is considered as being one MEK double rub.

Pencil Hardness

Pencil hardness is determined by the procedure defined in Paint Testing Manual by H. A. Gardner and G. G. Sward in the 12th Ed. (1962), pp. 131-132. One part is modified. When the coating is broken to the metal surface, that constitutes a failure. The results reported here are a pencil hardness that does not break the film, but the next pencil grade does break the film.

Impact Resistance

Coated panels are subjected to the impact of a falling weight from a Gardner Impact Tester at different calibrated heights ranging from 0 to 180 inch-pounds (20.34 J). The impacted area is then tested for adhesion by applying tape in a manner such that no air bubbles are trapped under the tape. The tape is then pulled with a rapid and forceful fashion in an attempt to pull the coating away from the substrate. Next, a HCl-$CuSO_4$-water solution is applied to the impacted area to check for failure.

T-BEND

T-Bend is used as a measure of the flexibility of the coating on the panel. T-Bend flexibility is measured with a two-inch (5.08 cm) by 12 inch (30.48 cm) specimen of uniform thickness. A bend is made in the panel at approximately 0.75 inch (19.05 mm) from the end of the coated panel by using a fingerbrake. The bend is squeezed tighter with the palm of the hand. Then the bent specimen is placed in a vice, which is previously taped with plastic tape to prevent scratching the substrate, and the panel is bent back on itself to form a 180 degree bend. The stressed area is then tested for adhesion by taping with Scotch 610 tape. The tape is applied in a manner such that no air bubbles are trapped under the tape. The tape is then pulled

with a rapid and forceful fashion at a 90 degree angle in an attempt to pull the coating away from the substrate. Next, a solution of copper sulfate in 1.0 N hydrochloric acid is applied to the stressed area. The purpose of this step is to oxidize any resulting bare metal in order to more accurately observe adhesion failures. The specimen is examined under a 30X powered microscope to determine failure. The first bend is noted as T0 because there is no panel sandwiched between the bend. The process of bending the panel by using the fingerbrake and vice is continued until there is no sign of cracking or adhesion loss. Each successive bend is noted as T1, T2, T3, T4, etc. because of the number of layers of panel sandwiched between plys. The lower the number of T-bends, the better the flexibility.

Acid Resistance

Glacial acetic acid, 1 ml, is placed on the coating and a timer started. When the coating delaminates from the substrate, failure has occurred and the timer is stopped. This time is recorded and referred to as time to failure for glacial acetic acid.

Boiling Water Resistance

A coated panel is immersed in boiling water for 60 minutes (3600 seconds). The panel is then removed and cut through with an eleven blade cross hatch knife with 1.5 mm spacing. A strip of cellophane tape is applied to the scratched surface and the tape is then pulled off. The adhesion is rated in accordance to the following scale:

5B The edges of the cuts are completely smooth; none of the squares of the lattice is detached.

4B Small flakes of the coating are detached at intersections: less than 5 percent of the area is affected.

3B Small flakes of the coating are detached along edges and at intersections of cuts. The area affected is 5 to 15 percent of the lattice.

2B The coating has flaked along the edges and on parts of the squares. The area affected is 15 to 35 percent of the lattice.

1B The coating has flaked along the edges of cuts in large ribbons and whole squares have detached. The area affected is 35 to 65 percent of the lattice.

0B Flaking and detachment are worse than Grade 1.

Water Pasteurization Resistance

Water pasteurization resistance is performed on a single specimen for each coating to determine the permeability of the coating to water with pressure and heat. The width of each specimen is about 12 centimeters while the length is about 5 centimeters. A mold and the Gardner Impacter Tester are used to form a semi-circular bend across each specimen. The semi-circular bend is used to simulate a stressed area. A dart impacter rod is dropped from 160 inch-lbs (18.08 J) for all the specimens when forming the bend. The specimens are then placed in a Model 8100-TD NORCO Autoclave with deionized water for 90 minutes at 121 °C (250 °F) and 1 bar (15 psi, 103 kPa) pressure. The clock is only started after both the desired temperature and pressure are reached. After the specimens are pasteurized for the prescribed conditions, the heat is turned off, the pressure is bled off and the panels are removed for testing. Testing of the coated panels are performed within fifteen minutes of removal from the autoclave so that the data is not influenced by the water leaving the coating. The specimens are blotted dry after removal from the autoclave with a paper towel. The specimens are rated for adhesion. Adhesion is determined by using the tape test described in method A of ASTM 3359-83. Adhesion is rated according to the following scale:

5A No peeling or removal

4A Trace peeling or removal along incisions

3A Jagged removal along incisions up to 1/16 inch. (1.6 mm)

2A Jagged removal along most of incisions up to 1/8 in. (3.2 mm)

1A Removal from most of the area of the X under the tape

0A Removal beyond the area of the X

The tape is SCOTCH 610 tape. X-Cuts are made in the stressed and non-stressed areas of each specimen.

The results are given in the following tables.

TABLE I

| FILM PERFORMANCE OF AQUEOUS DISPERSIONS ON UNTREATED COLD ROLLED STEEL (24 GAUGE) | | | | | | |
|---|---|---|---|---|---|---|
| EXAMPLE | MEK DR | PENCIL HARDNESS | IMPACT RESISTANCE (in-lb/J) | T-BEND | ACID RESISTANCE (min.) | 60 MIN. BOILING WATER RESISTANCE |
| 2 | >100 | 4H | >180/>20.34 | N.D.[b] | 20 | 5B[a] |
| 4 | 200 | 4H | 52/5.88 | T4 | >30 | N.D.[b] |
| 6 | 45 | 3H | 67/7.57 | T4 | >30 | N.D.[b] |
| 10 | 70 | 5H | 60/6.78 | T6 | >30 | N.D.[b] |
| 12 | 60 | 4H | 88/9.94 | T4 | >30 | N.D.[b] |

[a]5B refers to no detached squares of coating from the lattice.
[b]N.D. is an abbreviation for test not determined.

TABLE II

| FILM PERFORMANCE OF AQUEOUS DISPERSIONS ON TIN FREE STEEL CAN STOCK | | |
|---|---|---|
| | WATER PASTEURIZATION ADHESION | |
| EXAMPLE | NON-STRESSED | STRESSED |
| 4 | 5A[a] | 5A[a] |
| 6 | 5A[a] | 5A[a] |
| 10 | 5A[a] | 4A[b] |
| 12 | 5A[a] | 5A[a] |

[a]5A refers to no peeling or removal of coating.
[b]4A refers to trace peeling of coating.

## Claims

1. An adduct prepared by reacting (1) at least one compound containing only one aromatic hydroxyl group and at least one polymerizable ethylenically unsaturated group per molecule with (2) at least one epoxy resin having an average of more than one vicinal epoxy groups per molecule in quantities which provide a ratio of moles of component (1) to epoxy equivalent contained in component (2) of from 0.05:1 to 1.1:1; and optionally reacting said adduct with (3) at least one of water, phenols or aliphatic or aromatic secondary amines which phenols and amines are free of substituent groups which would tend to prevent or substantially inhibit the free radical polymerization of polymerizable ethylenically unsaturated groups, component (3) being present in an amount which reduces the epoxy content to a value between zero and about 1 percent by weight.

2. An adduct of Claim 1 wherein

(i) component (1) is a compound represented by the following formula 1:

Formula I

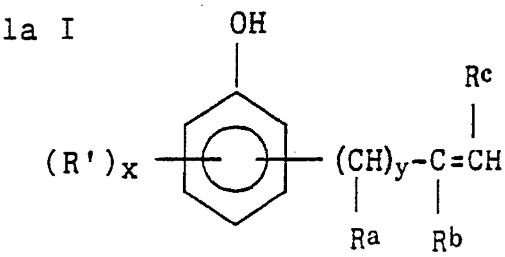

wherein each R′, $R^a$, $R^b$ and $R^c$ are independently hydrogen or a group which does not substantially inhibit free radical polymerization; x has a value from 1 to 4 and y has a value from zero to 18;

(ii) component (2) is an epoxy resin represented by the following formulas II, III, IV or V:

Formula II

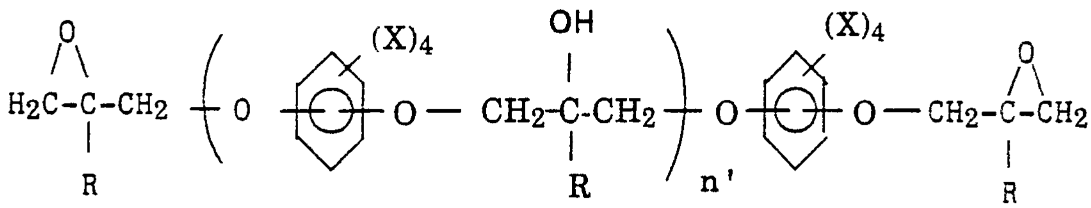

Formula III

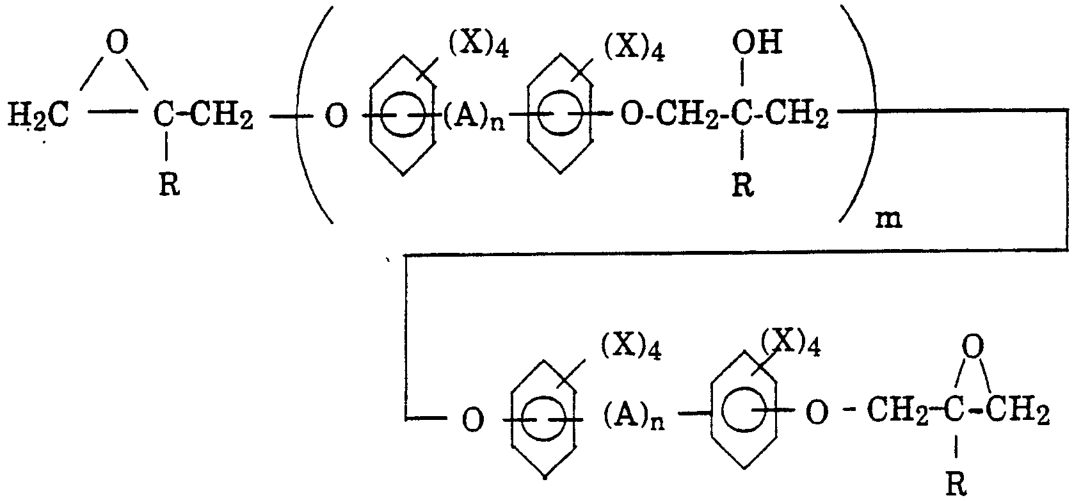

Formula IV

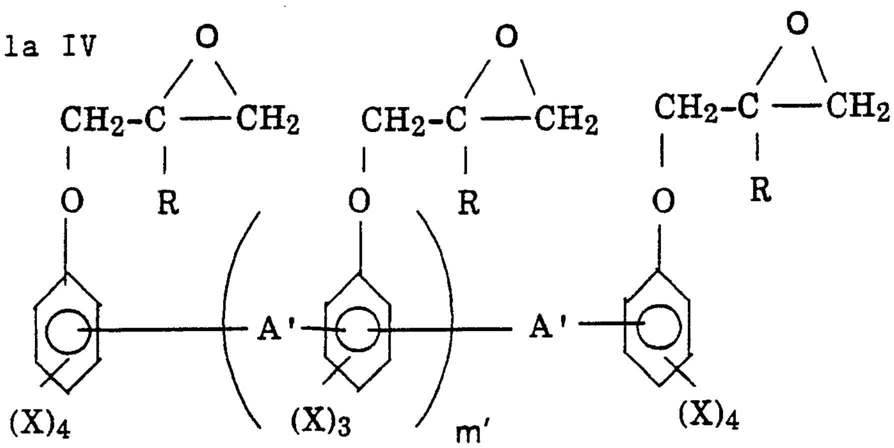

Formula V

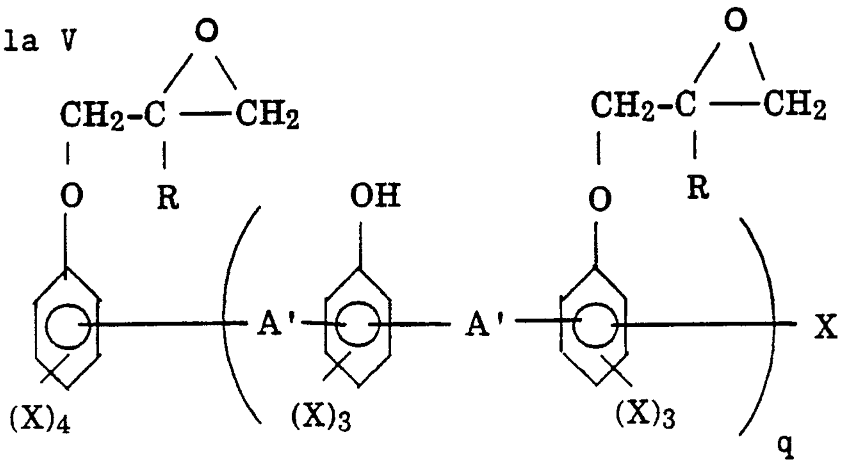

wherein each A is independently a divalent hydrocarbyl group having from 1 to 20 carbon atoms, -O-, -S-, -S-S-, -SO-, $-SO_2-$, -CO- or -O-CO-O-; each A′ is independently a divalent hydrocarbyl group having from 1 to 20 carbon atoms; each R is independently hydrogen or an alkyl group having from 1 to 6 carbon atoms; each X is independently hydrogen, a halogen atom, a hydrocarbyl or hydrocarbyloxy group having from 1 to 20 carbon atoms; m has an average value from zero to 30; m′ has a value from 0.01 to 0.5; each n independently has a value of zero or 1; n′ has an average value from zero to 30; and 9 has an average value from 1 to 6; and

(iii) component (3), when present, is (a) a secondary amine represented by the formula $HNR_2$ wherein each R is independently a hydrocarbyl group having from 1 to 9 carbon atoms and which can contain a substituent group which does not substantially inhibit free radical polymerization; (b) a phenol represented by the following formula VI:

VI

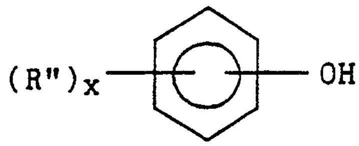

wherein each R″ is independently hydrogen, a halogen, a hydrocarbyl or hydrocarbyloxy group having from 1 to 20 carbon atoms and x has a value from 1 to 4; or (c) any combination thereof.

3. An adduct of Claim 2 wherein

(i) component (1) is a compound wherein each R′ is independently hydrogen, chlorine, bromine, nitro, methoxy, ethoxy or an alkyl group having from 1 to 9 carbon atoms;

(ii) component (2) is an epoxy resin represented by formula III wherein each A is a divalent hydrocarbyl group having from 1 to in carbon atoms; each R is hydrogen; each X is independently hydrogen, chlorine, bromine or a hydrocarbyl or a hydrocarbyloxy group having from 1 to 4 carbon atoms; n has a value of 1 and m has an average value from 2 to 20; and

(iii) component (3) is a secondary amine wherein each R is independently a hydrocarbyl or hydroxyl substituted hydrocarbyl group having from 1 to 4 carbon atoms; a phenol wherein each R″ is independently hydrogen, chlorine, bromine, a hydrocarbyl group having from 1 to 10 carbon atoms which can be substituted with a chlorine atom, a bromine atom, a nitro group, a hydroxyl group or an alkyl group having from 1 to 4 carbon atoms or any combination thereof.

4. A polymerizable mixture comprising an adduct prepared by reacting (1) at least one compound containing only one aromatic hydroxyl group and at least one polymerizable ethylenically unsaturated group per molecule with (2) at least one epoxy resin having an average of more than one vicinal epoxy group per molecule in quantities which provide a ratio of moles of component (1) to epoxy equivalent contained in component (2) of from 0.05:1 to 1.1:1; and optionally reacting said adduct with (3) at least one of water, phenols or aliphatic or aromatic secondary amines which phenols and amines are free of substituent groups which would tend to prevent or substantially inhibit the free radical polymerization of polymerizable ethylenically unsaturated groups; component (3) being present in an amount which reduces the epoxy content to a value between zero and about 1 percent by weight; (4) a carboxylic acid containing a polymerizable ethylenically unsaturated group; and optionally, (5) a polymerizable ethylenically unsaturated compound free of carboxyl groups: wherein (a) the reaction product formed from components (1) and (2) and optional component (3) is present in amounts of from 25 to 95 percent by weight based upon the combined weight of components (1), (2), (3), (4) and (5); (b) component (4) is employed in an amount such that the acid, (-COOH group), content in said polymerizable mixture is from 1 to 30 percent by weight, using 45 as the acid equivalent weight; and (c) component (5) is present in an amount of from zero to 74 percent by weight based upon the combined weight of components (1), (2), (3), (4) and (5)

5. A polymerizable mixture of Claim 4 wherein

(i) component (1) is a compound represented by the following formula 1:

Formula I

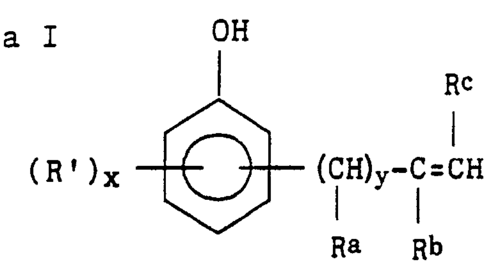

wherein each R′, $R^a$, $R^b$ and $R^c$ are independently hydrogen or a group which does not substantially inhibit free radical polymerization; x has a value from 1 to 4 and y has a value from zero to 18;

(ii) component (2) is an epoxy resin represented by the following formulas II, III, IV or V:

Formula II

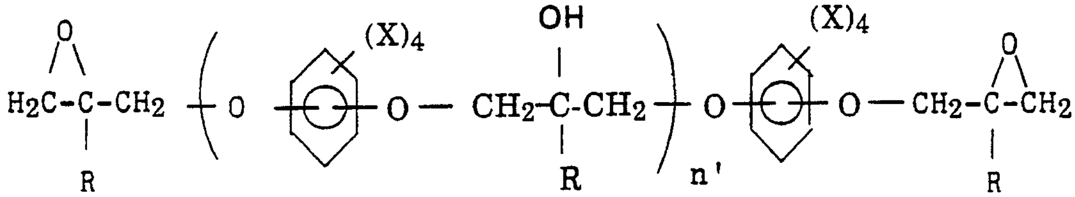

Formula III

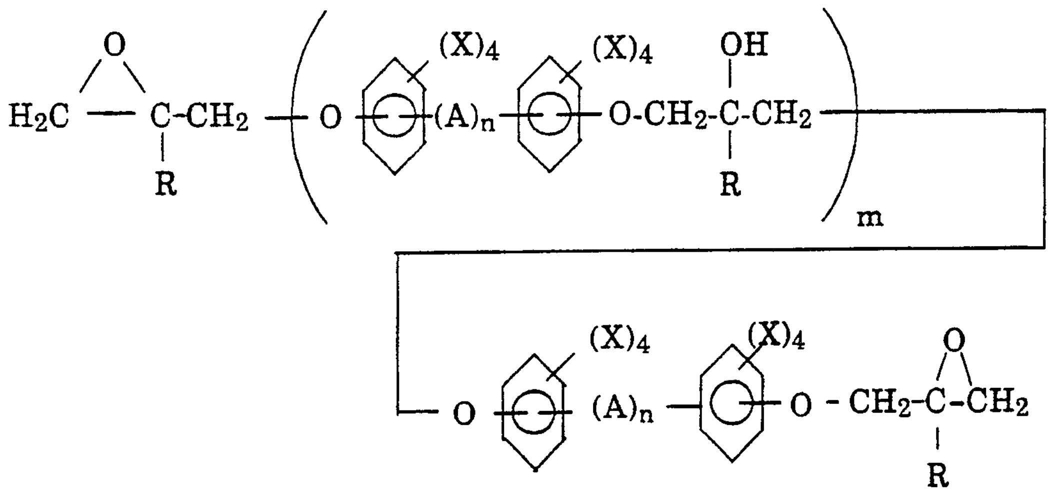

Formula IV

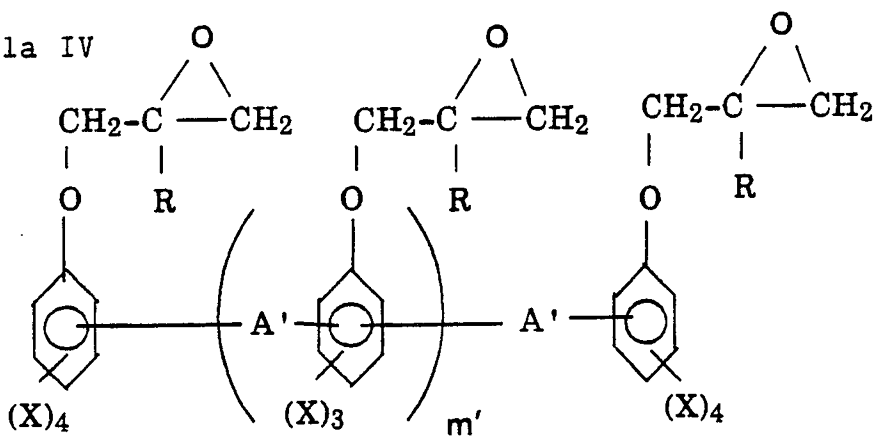

wherein each A is independently a divalent hydrocarbyl group having from 1 to 20 carbon atoms, -O-, -S-, -S-S-, -SO-, -$SO_2$-, -CO- or -O-CO-O-; each A′ is independently

Formula V

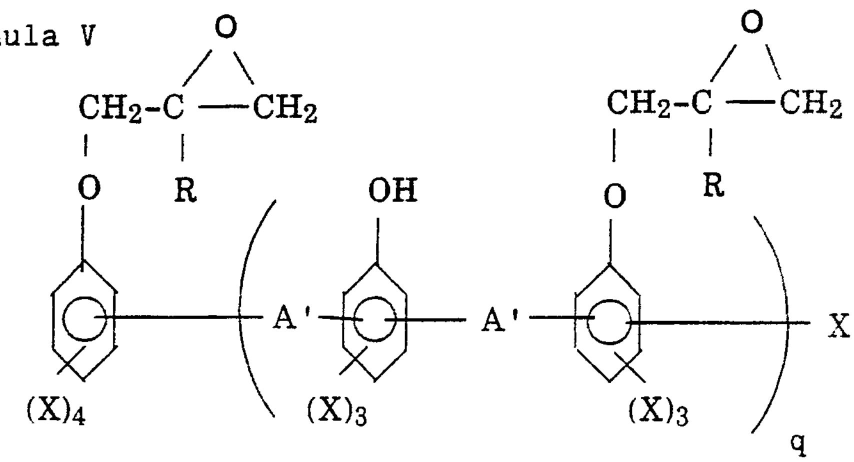

a divalent hydrocarbyl group having from 1 to 20 carbon atoms; each R is independently hydrogen or an alkyl group having from 1 to 6 carbon atoms; each X is independently hydrogen, a halogen atom, a hydrocarbyl or hydrocarbyloxy group having from 1 to 20 carbon atoms; m has an average value from zero to 30; m′ has a value from 0.01 to 0.5; each n independently has a value of zero or 1; n′ has an average value from zero to 30; and g has an average value from 1 to 6;

(iii) component (3), when present, is (a) a secondary amine represented by the formula $HNR_2$ wherein each R is independently a hydrocarbyl group having from 1 to 9 carbon atoms and which can contain a substituent group which does not substantially inhibit free radical polymerization; (b) a phenol represented by the following formula VI:

VI

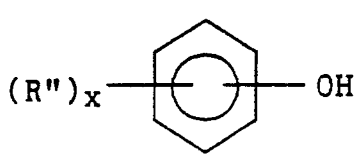

wherein each R″ is independently hydrogen, a halogen, a hydrocarbyl or hydrocarbyloxy group having from 1 to 20 carbon atoms and x has a value from 1 to 4; or (c) any combination thereof

(iv) component (4) is acrylic acid, methacrylic acid, itaconic acid, citraconic acid, mesaconic acid, maleic acid, fumaric acid or any combination thereof;

(v) component (5) is an ethylenically unsaturated aromatic compound, an ethylenically unsaturated aliphatic compound, an alkyl acrylate, an alkyl methacrylate, a hydroxyalkyl acrylate, a hydroxyalkyl methacrylate, acrylonitrile, methacrylonitrile, vinyl chloride, vinylidene chloride, vinyl acetate, chloroprene, acrylamide or any combination thereof.

6. A polymerizable mixture of Claim 5 wherein

(i) component (1) is a compound wherein each R′ is independently hydrogen, chlorine, bromine, nitro, methoxy, ethoxy or an alkyl group having from 1 to 9 carbon atoms;

(ii) component (2) is an epoxy resin represented by formula III wherein each A is a divalent hydrocarbyl group having from 1 to 4 carbon atoms; each R is hydrogen; each X is independently hydrogen, chlorine, bromine or a hydrocarbyl or a hydrocarbyloxy group having from 1 to 4 carbon atoms; n has a value of 1 and m has an average value from 2 to 20;

(iii) component (3) is a secondary amine wherein each R is independently a hydrocarbyl or hydroxyl substituted hydrocarbyl group having from 1 to 4 carbon atoms; a phenol wherein each R″ is independently hydrogen, chlorine, bromine, a hydrocarbyl group having from 1 to 10 carbon atoms which can be substituted with a chlorine atom, a bromine atom, a nitro group, a hydroxyl group or an alkyl group having from 1 to 4 carbon atoms or any combination thereof;

(iv) component (4) is acrylic acid or methacrylic acid or any combination thereof; and

(v) component (5) is styrene, a-methylstyrene, methyl methacrylate, butadiene, acrylonitrile, vinyl chloride, methylacrylate, 2-ethylhexyl-acrylate, butylacrylate, methylmethacrylate, 2-ethylhexylmethacrylate,

acrylamide, methacrylamide or any combination thereof.

7. A polymer resulting from polymerizing a polymerizable mixture of Claim 4 in the presence of an effective amount of one or more suitable polymerization catalysts.

8. A water miscible product resulting from reacting the polymer resulting from polymerizing a polymerizable mixture comprising an adduct prepared by reacting (1) at least one compound containing only one aromatic hydroxyl group and at least one polymerizable ethylenically unsaturated group per molecule with (2) at least one epoxy resin having an average of more than one vicinal epoxy group per molecule in quantities which provide a ratio of moles of component (1) to epoxy equivalent contained in component (2) of from 0.05:1 to 1.1:1; and optionally reacting said adduct with (3) at least one of water, phenols or aliphatic or aromatic secondary amines which phenols and amines are free of substituent groups which would tend to prevent or substantially inhibit the free radical polymerization of polymerizable ethylenically unsaturated groups; component (3) being present in an amount which reduces the epoxy content to a value between zero and 1 percent by weight; (4) a carboxylic acid containing a polymerizable ethylenically unsaturated group; and optionally, (5) a polymerizable ethylenically unsaturated compound free of carboxyl groups; with (6) at least one of (a) a primary amine-containing compound,(b) a secondary amine-containing compound, (c) a tertiary amine-containing compound, (d) an alkali metal hydroxide, (e) an alkali metal carbonate, (f) an alkali metal bicarbonate, or (g) any combination thereof; wherein (i) the reaction product formed from components (1) and (2) and optional component (3) is present in amounts of from 25 to 95 percent by weight based upon the combined weight of components (1), (2), (3), (4) and (5); (ii) component (4) is employed in an amount such that the acid, (-COOH group), content in said polymerizable mixture is from 1 to 30 percent by weight, using 45 as the acid equivalent weight; (iii) component (5) is present in an amount of from zero to 74 percent by weight based upon the combined weight of components (1), (2), (3), (4) and (5); and (iv) component (6) is employed in any amount which renders said polymer water miscible.

9. A water miscible product of Claim 8 wherein

(i) components (1) and (2) are employed in quantities which provide a ratio of moles of component (1) to epoxy equivalent contained in component (2) of from 0.1:1 to 0.25:1;

(ii) component (1) and (2) and optional component (3) is present in amounts of from 70 to 85 percent by weight based upon the combined weight of components (1), (2), (3), (4) and (5);

(iii) component (4) is employed in an amount such that the acid, (-COOH group), content in said polymerizable mixture is from 3 to 8 percent by weight, using 45 as the acid equivalent weight; and

(iv) component (5) is present in an amount of from 12 to 27 percent by weight based upon the combined weight of components (1), (2), (3), (4) and (5).

10. A water miscible product of Claim 8 wherein

(i) component (1) is a compound represented by the following formula I:

Formula I

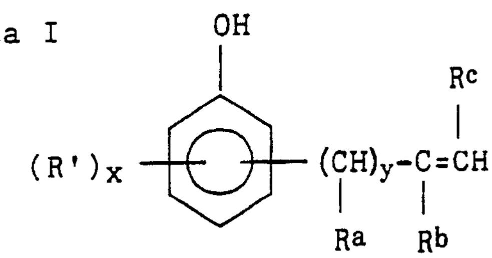

wherein each R′, $R^a$ $R^b$ and $R^c$ are independently hydrogen or a group which does not substantially inhibit free radical polymerization; x has a value from 1 to 4 and y has a value from zero to about 18;

(ii) component (2) is an epoxy resin represented by the following formulas II, III, IV or V:

Formula II

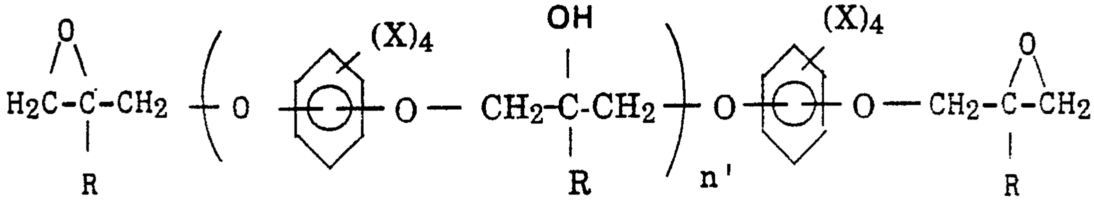

Formula III

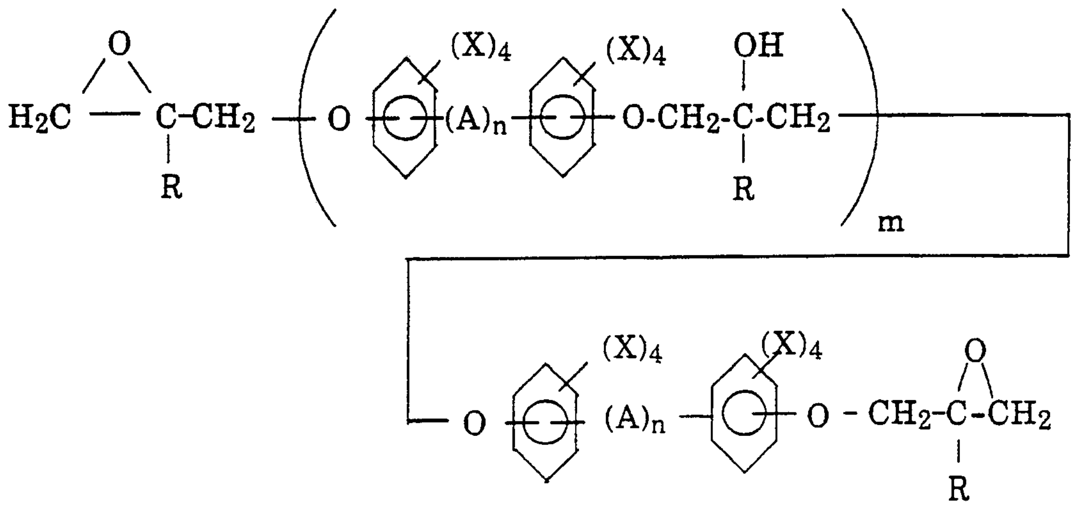

Formula IV

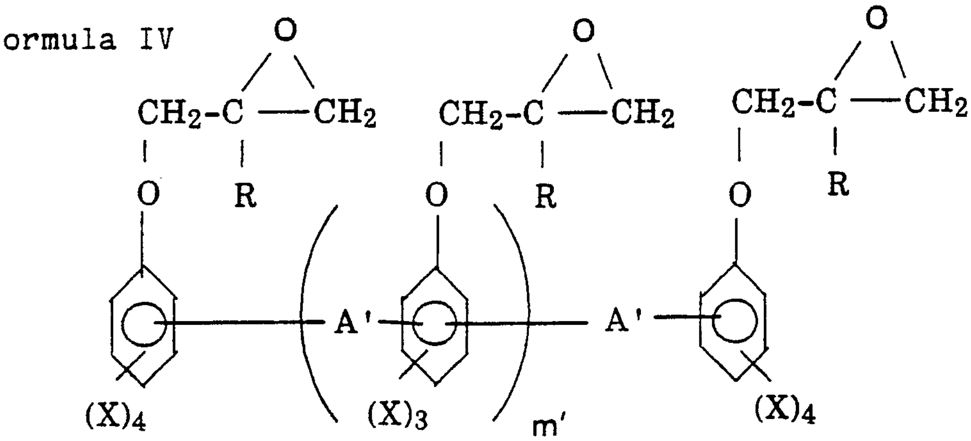

Formula V

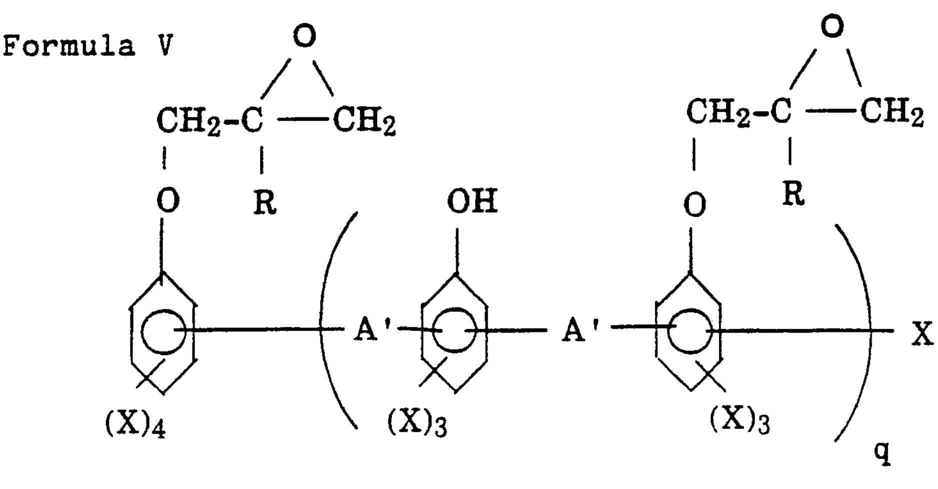

wherein each A is independently a divalent hydrocarbyl group having from 1 to 20 carbon atoms, -O-, -S-, -S-S-, -SO-, $-SO_2-$, -CO- or -O-CO-O-; each A′ is independently a divalent hydrocarbyl group having from 1 to 20 carbon atoms; each R is independently hydrogen or an alkyl group having from 1 to 6 carbon atoms; each X is independently hydrogen, a halogen atom, a hydrocarbyl or hydrocarbyloxy group having from 1 to 20 carbon atoms; m has an average value from zero to 30; m′ has a value from 0.01 to 0.5; each n independently has a value of zero or 1; n′ has an average value from zero to 30; and q has an average

value from 1 to 6;

(iii) component (3), when present, is (a) a secondary amine represented by the formula $HNR_2$ wherein each R is independently a hydrocarbyl group having from 1 to 9 carbon atoms and which can contain a substituent group which does not substantially inhibit free radical polymerization: (b) a phenol represented by the following formula VI

VI

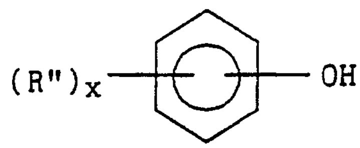

wherein each R″ is independently hydrogen, a halogen, a hydrocarbyl or hydrocarbyloxy group having from 1 to 20 carbon atoms and x has a value from 1 to 4; or (c) any combination thereof

(iv) component (4) is acrylic acid, methacrylic acid, itaconic acid, citraconic acid, mesaconic acid, maleic acid, fumaric acid or any combination thereof;

(v) component (5) is an ethylenically unsaturated aromatic compound, an ethylenically unsaturated aliphatic compound, an alkyl acrylate, an alkyl methacrylate, a hydroxyalkyl acrylate, a hydroxyalkyl methacrylate, acrylonitrile, methacrylonitrile, vinyl chloride, vinylidene chloride, vinyl acetate, chloroprene, acrylamide or any combination thereof; and

(vi) component (6) is (a) a compound represented by the formula

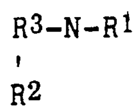

wherein each R', $R^2$ and $R^3$ is independently hydrogen, a hydrocarbyl or hydroxyl substituted hydrocarbyl group having from 1 to 9 carbon atoms; (b) sodium hydroxide, potassium hydroxide, sodium carbonate, potassium carbonate, sodium bicarbonate or potassium bicarbonate or (c) any combination thereof.

11. A water miscible product of Claim 10 wherein

(i) component (1) is a compound wherein each R′ is independently hydrogen, chlorine, bromine, nitro, methoxy, ethoxy or an alkyl group having from 1 to 9 carbon atoms;

(ii) component (2) is an epoxy resin represented by formula III wherein each A is a divalent hydrocarbyl group having from 1 to 4 carbon atoms; each R is hydrogen; each X is independently hydrogen, chlorine, bromine or a hydrocarbyl or a hydrocarbyloxy group having from 1 to in carbon atoms: n has a value of 1 and m has an average value from 2 to 20;

(iii) component (3) is a secondary amine wherein each R is independently a hydrocarbyl or hydroxyl substituted hydrocarbyl group having from 1 to 4 carbon atoms; a phenol wherein each R″ is independently hydrogen, chlorine, bromine, a hydrocarbyl group having from 1 to 10 carbon atoms which can be substituted with a chlorine atom, a bromine atom, a nitro group, a hydroxyl group or an alkyl group having from 1 to 4 carbon atoms or any combination thereof;

(iv) component (4) is acrylic acid or methacrylic acid or any combination thereof;

(v) component (5) is styrene, a-methylstyrene, methyl methacrylate, butadiene, acrylonitrile, vinyl chloride, methylacrylate, 2-ethylhexylacrylate, butylacrylate, methylmethacryiate, 2-ethylhexylmethacrylate, acrylamide, methacrylamide or any combination thereof; and

(vi) is (a) a compound represented by the formula

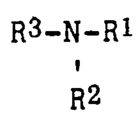

wherein each R', $R^2$ and $R^3$ is independently hydrogen, a hydrocarbyl or hydroxyl substituted hydrocarbyl group having from 2 to 4 carbon atoms.

12. A curable composition comprising the polymer formed from polymerizing the polymerizable mixture of Claim 4 and a curing amount of at least one curing agent therefor.

13. A curable composition comprising the water miscible product of Claim 8 and a curing amount of at least one curing agent therefor.

14. The product resulting from curing the curable composition of Claim 12.

15. The product resulting from curing the curable composition of Claim 13.

16. An aqueous coating composition containing a curable composition of Claim 12.

17. An aqueous coating composition containing a curable composition of Claim 13.